# EUROPÄISCHE PATENTSCHRIFT

(11) **EP 3 084 369 B1**
(45) Veröffentlichungstag und Bekanntmachung des Hinweises auf die Patenterteilung: **18.12.2019**
(21) Anmeldenummer: 14731921.4
(22) Anmeldetag: 28.05.2014
(51) Int. Cl.: G01F 23/284, H01P 1/04, H01P 3/127

(54) **RADARFÜLLSTANDMESSGERÄT**
RADAR-OPERATED LEVEL GAUGE
APPAREIL DE MESURE DE NIVEAU À RADAR

(30) Priorität: 19.12.2013 DE 102013226778
(43) Veröffentlichungstag der Anmeldung: 26.10.2016
(73) Patentinhaber: VEGA Grieshaber KG, 77709 Wolfach (DE)
(72) Erfinder: KECH, Günter, 77709 Wolfach-Kirnbach (DE); LENK, Fritz, 77761 Schiltach (DE); KIENZLE, Klaus, 77736 Zell a. H. (DE); MOTZER, Jürgen, 77723 Gengenbach (DE)
(74) Vertreter: Patentanwälte Bauer Vorberg Kayser
(86) Internationale Anmeldenummer: PCT/EP2014/061187
(87) Internationale Veröffentlichungsnummer: WO 2015/090630

(56) Entgegenhaltungen:
- AT-B- 249 188
- DE-C1- 10 060 069
- FR-A1- 2 660 803
- GB-A- 1 327 452
- US-A- 2 637 776

## Beschreibung

Die vorliegende Erfindung betrifft ein Radarfüllstandmessgerät gemäß dem Oberbegriff des Patentanspruchs 1.

Aus dem Stand der Technik sind Füllstandmessgeräte mit einem Signalgenerator zum Erzeugen und Aussenden von elektromagnetischen Wellen einer bestimmten Wellenlänge bekannt. Die Füllstandmessung erfolgt dabei mittels eines sogenannten Messrohrs, das beispielsweise als Standrohr oder Bypassrohr in einem Tank ausgebildet sein kann und für die elektromagnetischen Wellen als Hohlleiter zur Führung der elektromagnetischen Wellen wirkt. Derartige Füllstandmessgeräte werden in der Regel zur Füllstandmessung von Flüssigkeiten verwendet, wobei das Messrohr als zylindrisches Rohr ausgebildet ist, in das das Füllgut, das heißt insbesondere die Flüssigkeit, eindringt. An einer Grenzfläche des Füllmediums werden die ausgesendeten in dem Messrohr geführten elektromagnetischen Wellen wenigstens teilweise reflektiert, sodass mit Hilfe einer Laufzeitmessung der Füllstand des Mediums innerhalb des Messrohrs ermittelt werden kann.

Ein derartiges Füllstandmessgerät eignet sich besonders für Flüssigkeiten, beispielsweise Lösungsmittel oder Flüssiggase sowie Flüssigkeiten mit Schaumbildung sowie für Füllgüter mit niedriger dielektrischer Leitfähigkeit ε.

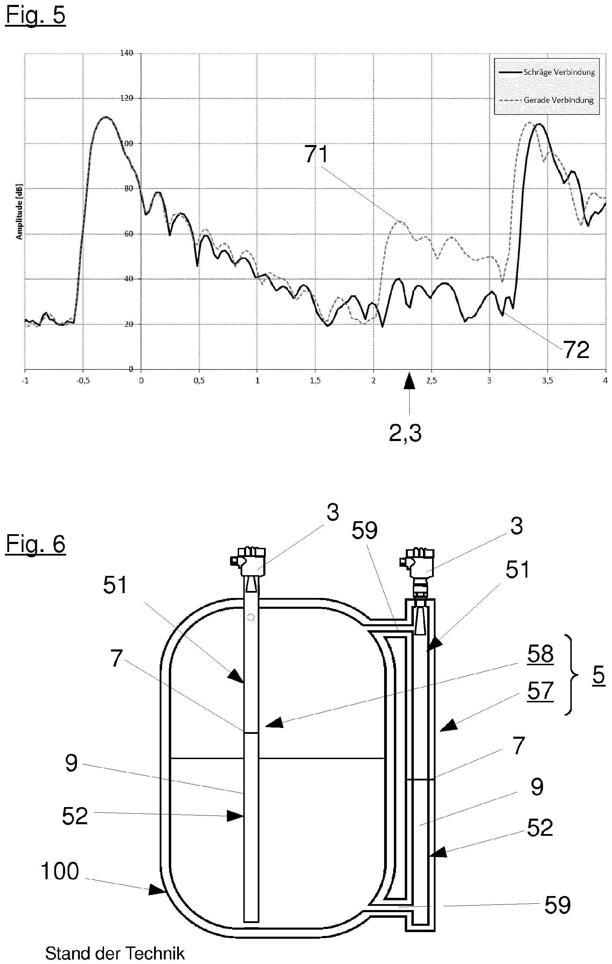

Figur 6 zeigt zwei Anwendungsbeispiele solcher Radarfüllstandmessgeräte 1 zur Füllstandmessung in einem Tank 100. Ein Messrohr 5 zur Führung der von einem Signalgenerator 3 erzeugten und ausgesendeten elektromagnetischen Wellen kann entweder als sogenanntes Standrohr 58, wie es im linken Abschnitt der Figur 6 dargestellt ist, oder als Bypass 57, der seitlich mit dem Tank 100 verbunden ist, ausgebildet sein. Sowohl in dem Standrohr 58 als auch in dem Bypass 57 kann eine zusätzliche Messsonde, , angeordnet sein,.

Der Bypass 57 ist dabei mittels Fluiddurchlässen 59 mit einer Hauptkammer des Tanks 100 verbunden, sodass der Füllstand innerhalb des Bypasses 57 repräsentativ für den Füllstand in dem Tank 100 ist. Das Standrohr 58 ist im vorliegenden Ausführungsbeispiel als bodenseitig offenes und gegebenenfalls mit zusätzlichen Öffnungen versehenes Rohr ausgeführt, sodass auch der in dem Standrohr 58 erhaltene Füllstand repräsentativ für den Füllstand des Tanks 100 ist.

Bei den aus dem Stand der Technik bekannten Aufbauten ist es bekannt, dass das Standrohr 58 beziehungsweise der Bypass 57 zwei- oder mehrteilig ausgeführt sind. Eine solche geteilte Ausführung kann beispielsweise aufgrund von verfügbaren Rohrlängen sowie anderen Anforderungen, beispielsweise in der Handhabbarkeit bei der Montage zweckdienlich sein.

Im Stand der Technik werden solche Messrohre 5 beispielsweise zweiteilig mit einem ersten Messrohrabschnitt 51 sowie einem sich daran anschließenden zweiten Messrohrabschnitt 52 ausgebildet. Beim Zusammenfügen der einzelnen Messrohrabschnitte 51, 52 erfolgt dabei durch ein Ablängen der Messrohrabschnitte senkrecht zu ihrer Längsachse, wobei die einzelnen Messrohrabschnitte 51, 52 an einer Verbindungsstelle 7 miteinander verschweißt werden.

Aus DE 100 60 069 C1 sind Füllstandmessgeräte mit zwei Mikrowellenleitern, die durch eine Durchlassscheibe getrennt sind, wobei die Durchlassscheibe schräg zwischen die beiden Mikrowellenleiter eingebaut ist. US 2,637,776 A offenbart rechteckige Hohlleiterstücke, die über schräge Flächen miteinander verbunden sind. FR 2 660 803 A1 offenbart die Verbindung von zwei Wellenleitern durch ein U-förmiges Teil.

Bei dem aus dem Stand der Technik bekannten Vorgehen hat es sich als problematisch herausgestellt, dass an derartigen Verbindungsstellen 7 einerseits Probleme hinsichtlich der Maßhaltigkeit, insbesondere in Hinblick auf eine korrekte Ausrichtung und Verbindung der Messrohrabschnitte 51, 52 auftreten und darüber hinaus an der Verbindungsstelle 7 zusätzliche Reflexionen der ausgesendeten elektromagnetischen Wellen erfolgen, die aufgrund ihrer Intensität Messergebnisse verfälschen oder unbrauchbar machen können.

Es ist die Aufgabe der vorliegenden Erfindung, ein Radarfüllstandmessgerät mit einem wenigstens zweiteiligen geraden Messrohr derart weiterzubilden, dass die aus dem Stand der Technik bekannten Probleme vermieden werden.

Diese Aufgabe wird durch ein Radarfüllstandmessgerät mit den Merkmalen des Patentanspruchs 1 gelöst.

Ein erfindungsgemäßes Radarfüllstandmessgerät weist einen Signalgenerator zum Erzeugen und Aussenden von elektromagnetischen Wellen einer bestimmten Wellenlänge sowie ein wenigstens zweiteiliges, Messrohr mit einem ersten Messrohrabschnitt und einem zweiten Messrohrabschnitt auf, wobei die Messrohre an einer Verbindungsstelle miteinander verbunden sind und wobei der erste Messrohrabschnitt ein erstes verbindungsstellenseitiges Ende aufweist und der zweite Messrohrabschnitt ein zweites verbindungsstellenseitiges Ende aufweist und wobei die Messrohrabschnitte an ihren jeweiligen verbindungsstellenseitigen Enden zueinander korrespondieren und schräg abgeschnitten sind, dass eine umlaufende Stirnkante der jeweiligen verbindungsstellenseitigen Enden in Längsrichtung des Messrohrs eine Längserstreckung aufweist.

Die Messrohrabschnitte sind erfindungsgemäß gerade ausgebildet und zueinander korrespondierend und bevorzugt jeweils derart abgeschnitten, dass die umlaufende Stirnkante in Längsrichtung des Messrohrs eine Längserstreckung von wenigstens einer halben Wellenlänge der ausgesendeten elektromagnetischen Wellen aufweist.

Eine Längserstreckung im Sinne der vorliegenden Anmeldung meint dabei eine Projektion der umlaufenden Stirnkante auf die Längsrichtung des Messrohrs im Bereich der Verbindungsstelle. Schräg abgeschnitten im Sinne der vorliegenden Anmeldung bedeutet, signifikant schräg, d. h. insbesondere nicht nur infinitesimal schräg, wie dies beispielsweise aufgrund von Fertigungstoleranzen auftritt.

Durch eine derartige Ausgestaltung der Verbindungsstelle der beiden Messrohrabschnitte wird erreicht, dass eine an der Verbindungsstelle erzeugte Reflexion der elektromagnetischen Wellen zum einen nicht an sämtlichen Punkten der Verbindungsstelle im gleichen Abstand zum Signalgenerator des Radarfüllstandmessgerätes erfolgt und damit die über den Umfang verteilten Reflexionen in einem empfangenen Signal keinen einzelnen Peak mit einer hohen Amplitude sondern eine entsprechende Verteilung über die Längserstreckung bewirken und zum zweiten durch eine Reflexion, die bevorzugt um wenigstens eine halbe Wellenlänge der ausgesendeten elektromagnetischen Wellen versetzt erfolgt durch eine destruktive Interferenz eine zusätzliche Abschwächung der an der Verbindungsstelle auftretenden Reflexionen erfolgt.

In einer weiteren Ausgestaltung, die nicht Teil dieser Erfindung ist, kann das Messrohr gebogen ausgeführt sein. Eine solche Ausgestaltung wird bspw. in Balasttanks von Schiffen häufig verwendet, in denen aufgrund ihrer verwinkelten Ausgestaltung keine geraden Messrohre zum Einsatz kommen können. Die Längsrichtung des Messrohrs ist in diesem Fall lokal an der Verbindungsstelle zu bestimmen.

Eine weitere Verbreiterung des an der Verbindungsstelle reflektierten Signals und dadurch eine Abschwächung der maximal auftretenden Amplitude kann dadurch erreicht werden, dass sich die umlaufende Stirnkante über wenigstens eine, bevorzugt wenigstens zwei, weiter bevorzugt wenigstens drei oder vier Wellenlängen der ausgesendeten elektromagnetischen Welle erstreckt. Die Reflexionen werden durch eine solche Ausbildung über einen größeren Bereich verteilt, sodass einerseits die maximale Amplitude im Gesamten geringer ausfällt und andererseits für eine Mehrzahl von Positionen eine destruktive Interferenz erreicht werden kann.

Eine besonders einfache Ausgestaltung kann erreicht werden, wenn die Messrohrabschnitte schräg abgeschnitten sind, wobei durch die umlaufende Stirnkante eine Ebene definiert wird, die mit der Längsrichtung des Messrohrs beziehungsweise des Messrohrabschnittes einen Winkel einschließt. Der Winkel, unter dem die Messrohrabschnitte schräg abgeschnitten sind, beträgt vorzugsweise höchstens 85°, weiter bevorzugt höchstens 75°, weiter bevorzugt höchstens 60°, wobei für aneinander grenzende Messrohrabschnitte vorzugsweise identische Winkel mit entgegengesetztem Vorzeichen gewählt werden. Auf diese Weise kann eine weitestgehend nahtlose Verbindung der einzelnen Messrohrabschnitte erreicht werden.

Eine einfache Verbindung von zwei Messrohrabschnitten kann erreicht werden, wenn der erste Messrohrabschnitt und der zweite Messrohrabschnitt mittels einer Muffe miteinander verbunden sind. Eine solche Muffe kann den ersten Messrohrabschnitt und den zweiten Messrohrabschnitt an ihren verbindungsstellenseitigen Enden außenseitig umschließen und somit eine gerade Ausrichtung der beiden Messrohrabschnitte zueinander sowie eine Stabilisierung erzielt werden. Bei einer Ausbildung des Messrohres als Standrohr kann eine derartige Steckverbindung mit einer Muffe bereits ausreichen für eine Verbindung von zwei Messrohrabschnitten sein, wobei zur zusätzlichen Fixierung die Muffe mit den Messrohrabschnitten bevorzugt zusätzlich verschweißt ist. Eine solch Verschweißung kann grundsätzlich umlaufend erfolgen, wobei durch eine Schweißnaht beispielsweise am Anfang und am Ende einer solchen Muffe zusätzliche Störstellen in das Messrohr eingebracht werden können, die dann wieder allesamt in einer Entfernung zum Signalgenerator liegen würden.

Bevorzugt ist daher die Muffe mit Längsschlitzen ausgebildet, wobei die Messrohrabschnitte und die Muffe in diesen Längsschlitzen miteinander verschweißt sind. Ein Verschweißen kann dabei bevorzugt ausschließlich in Längsrichtung erfolgen, wobei alternativ auch eine Ausgestaltung mit Verschweißungen in Querrichtung denkbar ist, wobei solche Schweißnähte wiederum bevorzugt schräg zu einer Längsrichtung des Messrohrs verlaufen.

Eine besonders einfache Ausgestaltung kann erreicht werden, wenn die Muffe durch die Längsschlitze geteilt ausgestaltet ist und damit vorzugsweise zwei Teile aufweist. Die Teile können bspw. als zwei Halbschalen oder Drittelschalen zur Verbindung der Messrohrabschnitte ausgebildet sein. In einer Ausgestaltung können die beiden Teile der Muffe auch als U-Pofile oder L-Profile ausgestaltet sein.

Eine Verschweißung erfolgt vorzugsweise entlang von Längskanten der Halbschalen oder U-Profile, wobei die Messrohrabschnitte zur Vermeidung von Reflexionen vorzugsweise im Bereich der Verbindungsstelle nicht mit den Halbschalen oder U-bzw. L-Profilen verschweißt sind.

Die Muffe kann außerdem zusätzlich zu den Längsschlitzen im Bereich der Verbindungsstelle Öffnungen aufweisen, durch die eine korrekte Ausrichtung der Messrohrabschnitte zueinander kontrolliert werden kann.

In einer weiteren Ausgestaltungsform der vorliegenden Erfindung können der erste Messrohrabschnitt und der zweite Messrohrabschnitt über wenigstens einen Flansch miteinander verbunden sein. Eine Verbindung über Flansche hat den Vorteil, dass eine Anbringung der Flansche an den Messrohrabschnitten in unmontiertem Zustand des Messrohrs erfolgen kann und dadurch erleichterte Arbeitsbedingungen geschaffen werden können. Dies kann sich beispielsweise positiv auswirken, wenn an beiden Messrohrabschnitten ein Flansch befestigt ist, wobei der Flansch mit dem jeweiligen Messrohrabschnitt bevorzugt verschweißt ist, und die Messrohrabschnitte mittels der Flansche miteinander verspannt sind. Durch die Verwendung von Flanschen wird auf eine gut erprobte und zuverlässige Verbindungstechnik gesetzt, die jedoch, insbesondere bei der Verwendung des Messrohrs als Bypass, in der Regel nicht ohne zusätzliche Dichtanordnungen auskommen wird.

Alternativ zur Anbringung eines Flansches an jedem Messrohrabschnitt kann an einem Messrohrabschnitt ein Flansch und an dem anderen Messrohrabschnitt ein Haltering, bevorzugt durch Verschweißen befestigt sein, wobei die Messrohrabschnitte mittels des Flansches und eines Überwurfflansches, der den Haltering übergreift, miteinander verspannt sind. Eine solche Ausgestaltung weist gegenüber einer Ausgestaltung mit zwei Flanschen den weiteren Vorteil auf, dass in der Regel der Messrohrabschnitt mit dem Haltering relativ zu dem Messrohrabschnitt mit dem Flansch drehbar ist, sodass eine optimale Ausrichtung der Messrohrabschnitte zueinander hier besonders leicht hergestellt werden kann.

Bei sämtlichen vorgenannten Varianten besteht die Möglichkeit, dass ausgesendete elektromagnetische Wellen, welche in die meist nicht vermeidbaren minimalen Spalte zwischen den Messrohrabschnitt eindringen, nach außen abstrahlen können, sodass auch hier zusätzliche Reflexionen verringert werden.

Bei sämtlichen vorgenannten Ausgestaltungsformen kann alternativ zu einer Verschweißung auch eine Verklebung vorgesehen sein.

In einer weiteren Ausgestaltungsform sind die Messrohrabschnitte umlaufend miteinander verschweißt, was sich insbesondere für eine Anwendung als Bypass eignet, da auf diese Weise auf zusätzliche Abdichteinrichtungen verzichtet werden kann. Eine entsprechende Ausgestaltung mit einer umlaufenden Verschweißung an der Verbindungsstelle kann im Bereich der Standrohre ebenfalls verwendet werden, da auf diese Weise zusätzliche Bauteile wie beispielsweise die vorgenannten Flansche und Muffen nicht notwendig sind.

Eine Verringerung der an der Verbindungsstelle entstehenden Reflexionen hinsichtlich ihrer Amplitude hat sich insbesondere auch bei Anordnungen gezeigt, bei denen Rohre mit unterschiedlichen Innendurchmessern verbunden werden. Es kann hierbei durch eine erfindungsgemäße Ausgestaltung der Verbindungsstelle eine signifikante Reduktion der an der Verbindungsstelle entstehenden Reflexionen hinsichtlich der auftretenden Maximalamplitude erreicht werden. Der gleiche Effekt konnte außerdem bei Rohren beobachtet werden, die nicht exakt in Längsrichtung aneinander gesetzt werden, sondern in ihrer Ausrichtung um einen kleinen Winkel voneinander abweichen, sodass wenigstens an einer Stelle des Umfangs des Messrohrs ein kleiner Spalt entsteht. Ferner werden auch bei Abstandsvariationen, das heißt wenn die aneinander gesetzten Messrohrabschnitte nicht exakt aneinander gesetzt werden und sich dadurch ein umlaufender Spalt ergibt, deutlich verbesserte Ergebnisse durch eine erfindungsgemäße Ausgestaltung erreicht.

Durch ein erfindungsgemäßes Vorgehen können damit auch kleinere Echos, beispielsweise von Oberflächen von Messmedien mit niedriger Dielektrizitätszahl noch detektiert werden. Insgesamt wird erreicht, dass der Signal-Rausch-Abstand vergrößert und damit die Messsicherheit durch ein erfindungsgemäßes Vorgehen deutlich erhöht wird. Durch die vorgenannten Maßnahmen konnten die an der Verbindungsstelle auftretenden Störechos verbreitert und ihre Amplitude um durchschnittlich 20 bis 25 dB verringert werden.

Die vorliegende Erfindung wird nachfolgend unter Bezugnahme auf die beigefügten Figuren eingehend erläutert.

Es zeigen:
- Figur 1: ein erfindungsgemäßes Radarfüllstandmessgerät in Seitenansicht,
- Figur 2: eine erfindungsgemäße Verbindungsstelle,
- Figur 3: eine perspektivische Darstellung des verbindungsstellenseitigen Endes eines Messrohrabschnittes,
- Figur 4 a bis e: verschiedene Verbindungsmöglichkeiten,
- Figur 5: den Vergleich von Messergebnissen einer Anordnung gemäß dem Stand der Technik und eine erfindungsgemäße Anordnung, und
- Figur 6: eine Messanordnung gemäß dem Stand der Technik (schon behandelt).

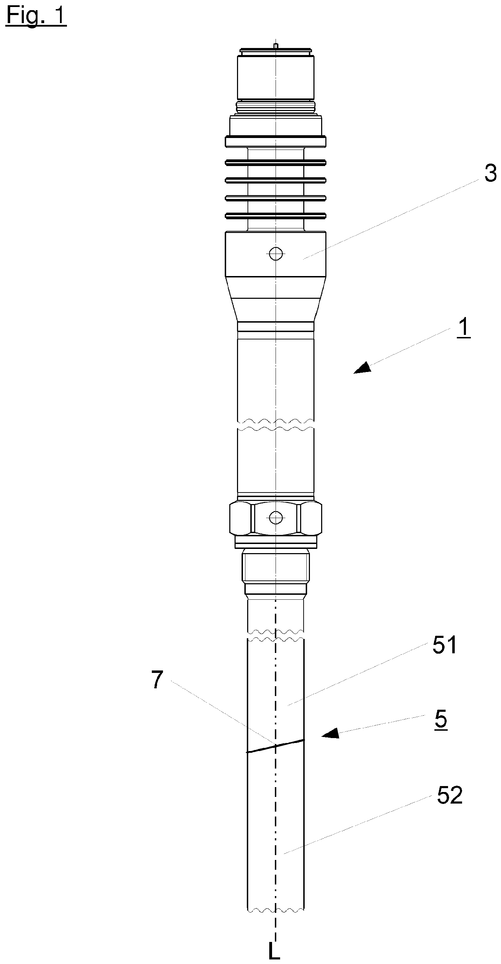

Figur 1 zeigt ein Radarfüllstandmessgerät 1 zur Ermittlung von Füllständen in einem Tank beziehungsweise Behälter 100. Das Radarfüllstandmessgerät 1 ist in der vorliegenden Darstellung in einer Seitenansicht gezeigt, wobei in einem rückseitigen Bereich hinter einem Wellenanpasser ein Signalgenerator 3 sowie eine Auswerteelektronik angeordnet sind, die vorliegend nicht näher dargestellt sind. Der Signalgenerator 3 ist geeignet ausgebildet, elektromagnetische Wellenpakete in einer Länge von etwa einer Nanosekunde sowie einer Frequenz von etwa 26 GHz auszusenden. Weitere typische, für die Füllstandmessung eingesetzte Frequenzen liegen bei 5,8 GHz bis 6,3 GHz, 10 GHz, 24 GHz bis 27 GHz oder 75 GHz bis 83 GHz.

Die elektromagnetischen Wellen einer vorbestimmten Wellenlänge λ werden über den Wellenanpasser in ein Messrohr 5 eingekoppelt, das für die elektromagnetischen Wellen als Hohlleiter wirkt. Die elektromagnetischen Wellen werden in dem Messrohr 5 in Richtung eines in dem Tank 100 befindlichen Füllgutes geführt und an einer Grenzfläche zwischen dem Füllgut und einem darüber befindlichen Medium, insbesondere Luft oder einem anderen Gas, reflektiert. Aus einer Messung einer Laufzeit der elektromagnetischen Wellenpakete kann dann ein Füllstand innerhalb des Tanks 100 errechnet werden. Zusätzlich zu Reflexionen an der Grenzfläche, das heißt an der Oberfläche des Füllgutes, werden auch Reflexionen an einer Verbindungsstelle zwischen einem ersten Messrohrabschnitt 51 und einem zweiten Messrohrabschnitt 52 hervorgerufen. Im Stand der Technik führen insbesondere Reflexionen an der Verbindungsstelle 7 dazu, dass beispielsweise bei Füllgütern mit niedriger Dielektrizitätszahl ε die Reflexionen an der Verbindungsstelle 7 eine Reflexion an der Oberfläche des Füllgutes im Bereich der Verbindungsstelle 7 überlagern, sodass die Zuverlässigkeit der vorgenommenen Messung hierunter erheblich leidet.

Bei dem in Figur 1 dargestellten Radarfüllstandmessgerät 1 ist das Messrohr 5 zweiteilig aus einem ersten Messrohrabschnitt 51 und einem zweiten Messrohrabschnitt 52 zusammengesetzt. Der erste Messrohrabschnitt 51 und der zweite Messrohrabschnitt 52 sind an einer Verbindungsstelle 7 miteinander verbunden, im vorliegenden Ausführungsbeispiel miteinander verschweißt.

Die Verbindungsstelle 7 ist im vorliegenden Ausführungsbeispiel derart ausgebildet, dass ein erstes verbindungsstellenseitiges Ende 53 des ersten Messrohrabschnitts 51 und ein zweites verbindungsstellenseitiges Ende 54 des zweiten Messrohrabschnitts 52 zueinander korrespondieren und schräg abgeschnitten sind, sodass insgesamt eine gerade Ausbildung des Messrohrs 5 erreicht wird.

In Figur 1 ist außerdem eine Längsrichtung L des Messrohres 5 eingezeichnet, die bei einem zylindrisch ausgebildeten Messrohr beispielsweise durch dessen Symmetrieachse bestimmt ist.

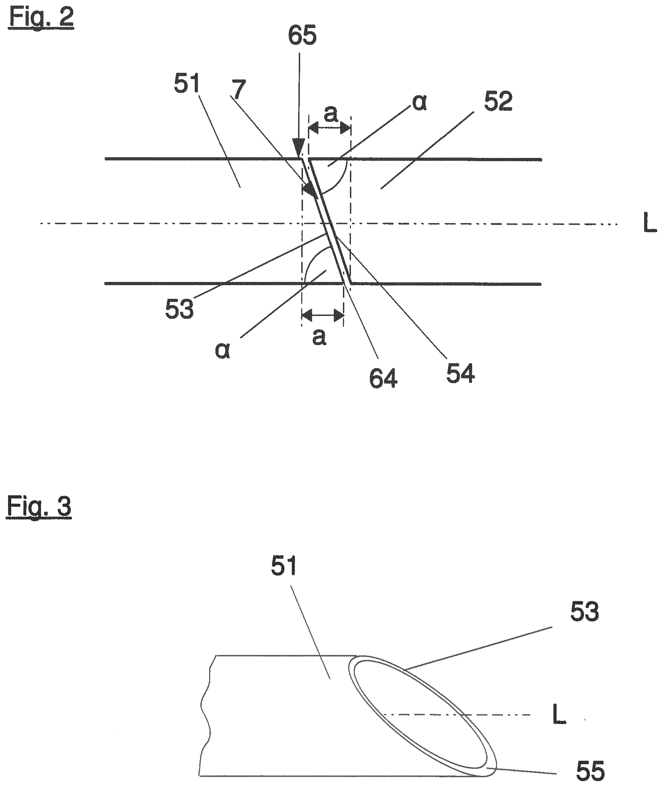

Figur 2 zeigt eine Vergrößerung der Verbindungsstelle 7 des Messrohrs 5 aus Figur 1. In der Darstellung in Figur 2 des Messrohrs 5 aus Figur 1 um 90° gedreht dargestellt, wobei die beiden Messrohrabschnitte 51, 52 noch nicht vollständig aneinander gefügt sind.

Die beiden Messrohrabschnitte 51, 52 sind im vorliegenden Ausführungsbeispiel und einem Winkel α von 70° zur Längsrichtung L des Messrohres 5 abgeschnitten. Bezogen auf den ersten Messrohrabschnitt 51 ist damit ein in Längsrichtung L gesehen in Richtung des zweiten Messrohrabschnitts 52 am weitesten vorne gelegener Punkt 64 einer umlaufenden Stirnkante 55 im Vergleich zu einem am weitesten hinten liegenden Punkt 64 der umlaufenden Stirnkante 55 um eine Längserstreckung a versetzt. Die umlaufende Stirnkante 55 erstreckt sich damit insgesamt über eine Längserstreckung a. Im vorliegenden Ausführungsbeispiel weist das Messrohr 5 einen Durchmesser von 85 mm auf, wobei ein Winkel α von 70° in diesem Fall zu einem Unterschied zwischen dem vorne liegenden Punkt 64 und dem hinten liegenden Punkt 65 von 29 mm führt. Bei einer Messfrequenz von 26 GHz, was einer Wellenlänge λ von etwa 11,5 mm entspricht, wird damit im vorliegenden Ausführungsbeispiel eine Verteilung der auftretenden Einzelreflexionen über annähernd drei Wellenlängen λ der ausgesendeten elektromagnetischen Wellen erreicht. Eine Projektion der umlaufenden Stirnkante 55, 56 der jeweiligen verbindungsstellenseitigen Enden 53, 54 der Messrohrabschnitte 51, 52 auf die Längsrichtung L des Messrohrs 5 beträgt damit den Abstand zwischen dem am weitesten vorne liegenden Punkt 64 und dem am weitesten hinten liegenden Punkt 65 des jeweiligen Messrohrabschnittes 51, 52. Bei dem schräg abgeschnittenen Rohr ist dies besonders einfach zu erkennen, wobei aber auch komplexere Verläufe der jeweiligen Stirnkante 55, 56 denkbar sind.

Die in Figur 2 dargestellten Messrohrabschnitte 51, 52 können beispielsweise direkt miteinander verschweißt, mittels Flansch- oder Muffenverbindung miteinander verbunden oder anderweitig verbunden werden.

Figur 3 zeigt eine perspektivische Darstellung des ersten Messrohrabschnittes 51 aus Figur 2, wobei in dieser Darstellung besonders gut eine erste umlaufende Stirnkante 55 des ersten verbindungsstellenseitigen Endes 53 des ersten Messrohrabschnitts 51 zu erkennen ist. Der zweite Messrohrabschnitt 52 sowie dessen zweites verbindungsstellenseitiges Ende 54 mit der zweiten umlaufenden Stirnkante 56 sind korrespondierend ausgebildet und vorliegend nicht näher dargestellt.

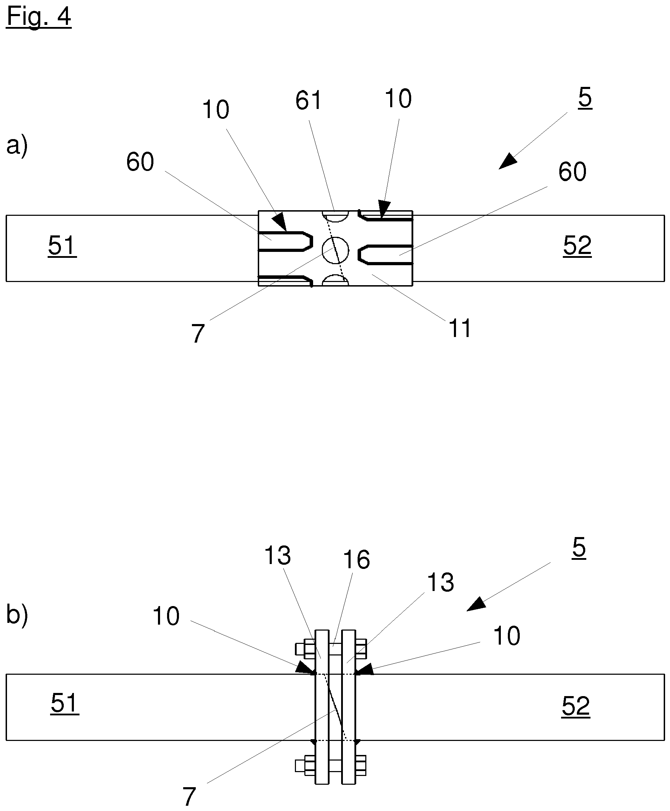

In den Figuren 4a bis c sind verschiedene Verbindungsmöglichkeiten für die beiden Messrohrabschnitte 51, 52 dargestellt, die alternativ zu einem Verschweißen, wie es in den Figuren 1 und 2 dargestellt ist, möglich sind.

Figur 4a zeigt eine Verbindung des ersten Messrohrabschnitts 51 mit dem zweiten Messrohrabschnitt 52 über eine Muffe 11. Die Muffe 11 ist im vorliegenden Ausführungsbeispiel geeignet ausgebildet, die Messrohrabschnitte 51, 52 außenseitig zu umgreifen und formschlüssig zu umfassen. Die Muffe 11 weist von ihren gegenüberliegenden Enden her eingebrachte Längsschlitze 60 auf, die im vorliegenden Ausführungsbeispiel zu jeweils etwa einem Drittel vom Ende her gesehen in die Muffe 11 eingeschnitten sind. Zusätzlich zu den Längsschlitzen 60 weist die Muffe 11 in Längsrichtung mittig angeordnete und über ihren Umfang verteilte Öffnungen 61 auf, die vorliegend als kreisrunde Bohrungen ausgestaltet sind. Die Messrohrabschnitte 51, 52 sind gemäß Figur 4a in die Muffe 11 derart eingeschoben, dass die Verbindungsstelle 7 zwischen den Messrohrabschnitten 51, 52 im Bereich der Öffnungen 61 angeordnet ist. Durch die Öffnungen 61 kann damit die Verbindungsstelle 7 in Hinblick auf eine Spaltbildung oder etwaige Abweichungen in der Ausgestaltung der Enden 53, 54 der einzelnen Messrohrabschnitte 51, 52 untersucht werden. Zusätzlich zu der durch die Muffe 11 hergestellten Steckverbindung können die Messrohrabschnitte 51, 52 noch zusätzlich mit der Muffe 11 verschweißt sein. Eine Schweißnaht 10 zum Verbinden der Messrohrabschnitte 51, 52 mit der Muffe 11 ist dabei bevorzugt entlang der Längskanten der Längsschlitze 60 geführt, sodass zusätzliche in Umfangsrichtung verlaufende Störstellen, die durch die Schweißnaht 10 verursacht werden können, vermieden werden. Die Schweißnähte 10 sind vorliegend bevorzugt in Längsrichtung geführt, können aber auch abschnittsweise in Umfangsrichtung des Messrohrs 5 verlaufen.

Figur 4b zeigt eine Verbindung der Messrohrabschnitte 51, 52 mit Hilfe von zwei Flanschen 13, die an den einzelnen Messrohrabschnitten 51, 52 endseitig beispielsweise durch eine Schweißnaht 10 angebracht sind. Die beiden Flansche 13 sind dann ihrerseits mittels Spannschrauben 16 miteinander verspannt, sodass eine stabile Verbindung der Messrohrabschnitte 51, 52 erreicht wird. Die Schweißnähte 10, mittels derer die Flansche 13 an den Messrohrabschnitten 51, 52 befestigt sind, können entweder umlaufend ausgebildet oder mittels einzelner Punktschweißungen realisiert sein. Entsprechende Punktschweißungen haben den Vorteil, dass eine umlaufende Schweißnaht, die, wie bereits beschrieben, zu Störstellen im Inneren des Messrohres führen kann, vermieden wird.

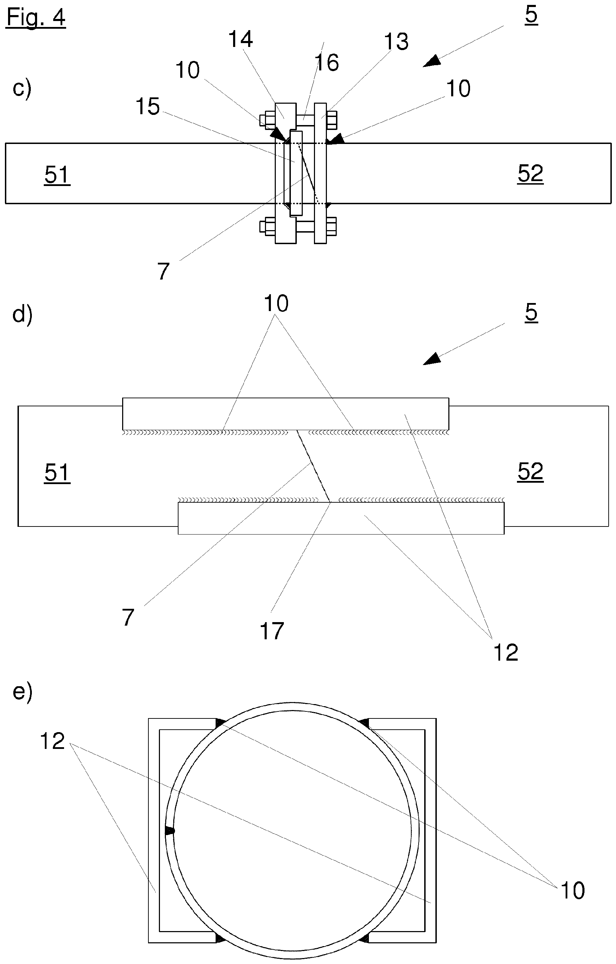

Figur 4c zeigt eine dritte Verbindungsvariante, bei der Messrohrabschnitt 51 ein Spannring 15 und an dem zweiten Messrohrabschnitt 52 ein Flansch 13 vorgesehen ist. Der Spannring 15 und der Flansch 13 können analog zu den Flanschen 13 aus Figur 4b mit ihrem jeweiligen Messrohrabschnitt 51, 52 entweder umlaufend mit einer Schweißnaht 10 verbunden sein oder durch einzelne Punktschweißungen. Eine Verbindung der beiden Messrohrabschnitte 51, 52 erfolgt in dem in Figur 4c dargestellten Ausführungsbeispiel mittels eines Überwurfflansches 14, der den Spannring 15 hintergreift und mit dem Flansch 13 an dem zweiten Messrohrabschnitt 52 über Spannschrauben 16 verspannt wird. Eine Ausgestaltung gemäß Figur 4c hat den Vorteil, dass mittels eines Spannringes 15 eine Ausrichtung in Radialrichtung des ersten Messrohrabschnittes 51 zu dem zweiten Messrohrabschnitt 52 ohne Weiteres möglich und nicht durch etwaige Bohrung in den Flanschen 13, wie sie in Figur 4b dargestellt sind, erschwert.

Figur 4d zeigt eine alternative Verbindung des ersten Messrohrabschnitts 51 mit dem zweiten Messrohrabschnitt 52 über zwei U-Profile 12. Die beiden U-Profile 12 sind im vorliegenden Ausführungsbeispiel geeignet ausgebildet, an den Messrohrabschnitten 51, 52 außenseitig anzuliegen und sie so in Längsrichtung zu stabilisieren. Die Messrohrabschnitte 51, 52 liegen so in den beiden U-Profilen 12 dass die Verbindungsstelle 7 in Längsrichtung etwa Mittig angeordnet ist. Zur weiteren Stabilisierung sind Messrohrabschnitte 51, 52 noch zusätzlich mit den U-Profilen 12 verschweißt. Eine Schweißnaht 10 zum Verbinden der Messrohrabschnitte 51, 52 mit den U-Profilen ist dabei bevorzugt entlang der Längskanten der U-Profile 12 geführt, sodass zusätzliche in Umfangsrichtung verlaufende Störstellen, die durch die Schweißnaht 10 verursacht werden können, vermieden werden. Um weitere potentielle Störstellen zu vermeiden weisen die Schweißnähte 10 außerdem im Bereich der Verbindungsstelle 7 Unterbrechungen 17 auf, sodass durch die Schweißung entstehende Wülste im Inneren der Messrohrabschnitte 51, 52 vermieden werden.

Alternativ zu einer Verschweißung wäre auch eine Verklebung denkbar.

In Figur 4e ist ein Querschnitt durch die Ausführungsform aus Figur 4d gezeigt. In dieser Darstellung ist deutlich zu erkennen, dass im vorliegenden Ausführungsbeispiel U-Profile 12 zur Verbindung der Messrohrabschnitte 51, 52 verwendet wurden. Durch solche U-Profile kann eine einfache Ausrichtung der Messrohrabschnitte 51, 52 relativ zueinander bei gleichzeitiger Kostenoptimierung erreicht werden. Insbesondere könne in der Regel Standardbauteile verwendet werden, sodass die Anfertigung von speziell abgestimmten Spezialbauteilen vermieden werden kann.

In Figur 5 sind beispielhafte Messkurven einer Anordnung gemäße dem Stand der Technik (Kurve 71) sowie einer erfindungsgemäßen Anordnung (Kurve 52) gegenüber gestellt. In den gegenüber gestellten Messkurven 71, 72 ist jeweils eine Echokurve, wie sie von dem Füllstandmessgerät 1 aufgenommen wird, dargestellt, wobei die ermittelten Laufzeitwerte bereits in eine Distanz in Metern umgerechnet und als Abszisse dargestellt sind. Auf der Ordinate ist die jeweils ermittelte Signalamplitude bei der entsprechenden Distanz wiedergegeben.

Für die vorliegende Beispielmessung wurde ein Messrohr 5 mit einer Gesamtlänge von 3,5 m mit einer Verbindungsstelle bei 2,3 m verwendet. Kurve 71 zeigt dabei die Messkurve gemäß dem Stand der Technik, wobei bei der Verbindungsstelle in einer Distanz von 2,3 m ein Echosignal mit einer Amplitude von 65 dB und am Rohrende bei einer Distanz von 3,5 m ein Echosignal mit einer Amplitude von 110 dB gemessen wird. Bei einer erfindungsgemäßen Anordnung, wie sie in den Figuren 1 bis 4 erläutert ist, konnte die Maximalamplitude des Echosignals der Verbindungsstelle 7 bei 2,3 m um 25 dB auf 40 dB reduziert werden, wohingegen die Amplitude am Rohrende bei 3,5 m eine identische Amplitude von 110 dB gemessen wird. Der maßgebliche Effekt für die Reduktion des Störstellenechos der Verbindungsstelle 7 wird in einer Verbreiterung des Echosignals sowie einer destruktiven Interferenz der an den verschiedenen Punkten der Verbindungsstelle 7 auftretenden Einzelreflexionen gesehen. Insgesamt kann auf diese Weise der Signal-Rausch-Abstand deutlich vergrößert und dadurch eine Messsicherheit erhöht werden.

Die zuvor beschriebene destruktive Interferenz liegt bereits bei einer Längserstreckung der Verbindungsstelle von wenigsten einer halben Wellenlänge der ausgesendeten elektromagnetischen Wellen vor. Eine deutliche Verbesserung kann jedoch erreicht werden, wenn sich die Verbindungsstelle 7 über ein Vielfaches der Wellenlänge der ausgesendeten elektromagnetischen Wellen erstreckt.

### Bezugszeichenliste

- 1: Radarfüllstandmessgerät
- 3: Signalgenerator
- 5: Messrohr
- 7: Verbindungsstelle
- 9: Seil- oder Stabsonde

- 10: Schweißnaht
- 11: Muffe
- 12: U-Profile / Schalen
- 13: Flansch
- 14: Überwurfflansch
- 15: Haltering
- 16: Spannschraube
- 17: Unterbrechung

- 51: erster Messrohrabschnitt
- 52: zweiter Messrohrabschnitt
- 53: erstes verbindungsstellenseitiges Ende
- 54: zweites verbindungsstellenseitiges Ende
- 55: erste Stirnkante
- 56: zweite Stirnkante
- 57: Bypass
- 58: Standrohr
- 59: Fluiddurchlässe

- 60: Längsschlitz
- 61: Öffnung
- 64: vorne liegender Punkt
- 65: hinten liegender Punkt
- 71: erste Messkurve
- 72: zweite Messkurve

- 100: Tank, Behälter

- L: Längsrichtung
- λ: Wellenlänge
- α: Winkel
- a: Längserstreckung

## Patentansprüche

1. Radarfüllstandmessgerät (1) mit einem Signalgenerator (3) zum Erzeugen und Aussenden von elektromagnetischen Wellen einer Wellenlänge (A)
- mit einem wenigstens zweiteiligen, geraden Messrohr (5) mit einem ersten Messrohrabschnitt (51) und einem zweiten Messrohrabschnitt (52), die an einer Verbindungsstelle (7) verbunden sind,
**dadurch gekennzeichnet, dass** die Messrohrabschnitte (51,52) an der Verbindungsstelle (7) direkt miteinander verbunden sind, dass der erste Messrohrabschnitt (51) und der zweite Messrohrabschnitt (52) an ihren jeweiligen verbindungsstellenseitigen Enden (53, 54) zueinander korrespondierend und schräg abgeschnitten, dass sich eine umlaufende Stirnkante (55, 56) der jeweiligen verbindungsstellenseitigen Enden (53, 54) in Längsrichtung (L) des Messrohrs (5)erstreckt.

2. Radarfüllstandmessgerät (1) nach Anspruch 1;
**dadurch gekennzeichnet, dass** der erste Messrohrabschnitt (51) und der zweite Messrohrabschnitt (52) jeweils derart abgeschnitten sind, dass sich eine umlaufende Stirnkante (55, 56) der jeweiligen verbindungsstellenseitigen Enden (53, 54) in Längsrichtung (L) des Messrohrs (5) wenigstens über eine halbe Wellenlänge (A) der ausgesendeten elektromagnetischen Wellen erstreckt.

3. Radarfüllstandmessgerät (1) nach Anspruch 1,
**dadurch gekennzeichnet, dass**
sich die umlaufende Stirnkante (55, 56) über wenigstens eine, bevorzugt wenigstens zwei, weiter bevorzugt, wenigstens drei oder vier Wellenlängen (A) der ausgesendeten elektromagnetischen Welle erstreckt.

4. Radarfüllstandmessgerät (1) nach einem der vorhergehenden Ansprüche,
**dadurch gekennzeichnet, dass**
die Messrohrabschnitte (51, 52) schräg abgeschnitten sind, wobei durch die umlaufende Stirnkante (55, 56) eine Ebene definiert wird, die mit der Längsrichtung (L) des Messrohrabschnitts einen Winkel (α) einschließt.

5. Radarfüllstandmessgerät (1) nach Anspruch 4, **dadurch gekennzeichnet, dass**
der Winkel (α) höchstens 85°, bevorzugt höchstens 75°, weiter bevorzugt, höchstens 60° beträgt.

6. Radarfüllstandmessgerät (1) nach einem der vorhergehenden Ansprüche,
**dadurch gekennzeichnet, dass**
der erste Messrohrabschnitt (51) und der zweite Messrohrabschnitt (52) mittels einer Muffe (11) verbunden sind.

7. Radarfüllstandmessgerät (1) nach Anspruch 6,
**dadurch gekennzeichnet, dass**
die Muffe (11) den ersten Messrohrabschnitt (51) und den zweiten Messrohrabschnitt (52) an ihren verbindungsstellenseitigen Enden (53, 54) außenseitig umschließt.

8. Radarfüllstandmessgerät (1) nach Anspruch 6 oder 7,
**dadurch gekennzeichnet, dass**
die Muffe (11) mit den Messrohrabschnitten (51, 52) verschweißt ist.

9. Radarfüllstandmessgerät (1) nach Anspruch 8,
**dadurch gekennzeichnet, dass**
die Muffe (11) Längsschlitze (60) aufweist und bevorzugt
die Messrohrabschnitte (51, 52) und die Muffe (11) in diesen Längsschlitzen (60) verschweißt sind.

10. Radarfüllstandsmessgerät (1) nach Anspruch 6,
**dadurch gekennzeichnet, dass**
die Muffe (11) in Längsrichtung geteilt und vorzugsweise zwei Teile (12) aufweist ist.

11. Radarfüllstandsmessgerät (1) nach Anspruch 10,
**dadurch gekennzeichnet, dass**
die zwei Teile (12) als Halbschalen, Teilschalen, U-Profile oder L-Profile ausgebildet sind.

12. Radarfüllstandmessgerät (1) nach einem der Ansprüche 8 bis 11,
**dadurch gekennzeichnet, dass**
die Teile (12) mit den Messrohrabschnitten (51, 52) vorzugsweise in Längsrichtung zusätzlich oder alternativ verklebt sind.

13. Radarfüllstandmessgerät (1) nach einem der Ansprüche 1 bis 5,
**dadurch gekennzeichnet, dass**
der erste Messrohrabschnitt (51) und der zweite Messrohrabschnitt (52) über wenigstens einen Flansch (13) verbunden sind.

14. Radarfüllstandmessgerät (1) nach Anspruch 12,
**dadurch gekennzeichnet, dass**
an beiden Messrohrabschnitten ein Flansch (13) befestigt, bevorzugt angeschweißt ist, und die Messrohrabschnitte (51, 52) mittels der Flansche (13) miteinander verspannt sind.

15. Radarfüllstandmessgerät (1) nach Anspruch 12,
**dadurch gekennzeichnet, dass**
an einem Messrohrabschnitt (51, 52) ein Flansch (13) und an dem anderen Messrohrabschnitt (51, 52) ein Haltering (15) befestigt, bevorzugt angeschweißt ist, und die Messrohrabschnitte (51, 52) mittels des Flansches (13) und eines Überwurfflansches (14), der den Haltering (15) übergreift, miteinander verspannt sind.

16. Radarfüllstandmessgerät (1) nach einem der Ansprüche 1 bis 5,
**dadurch gekennzeichnet, dass**
die Messrohrabschnitte (51, 52) umlaufend miteinander verschweißt sind.

## Claims

1. A radar level measuring device (1) with a signal generator (3) for generating and emitting electromagnetic waves of a wavelength (λ),
- with a straight measuring tube (5) consisting of at least two parts, with a first measuring tube section (51) and a second measuring tube section (52) connected to one another at a connection point (7),
**characterized in that** the measuring tube sections (51, 52) are directly connected to one another at the connection point (7), that the first measuring tube section (51) and the second measuring tube section (52) are cut off in a mutually corresponding and oblique manner at the respective ends (53, 54) thereof on the side of the connection point, that a peripheral frontal edge (55, 56) of the respective ends (53, 54) on the side of the connection point extends in the longitudinal direction (L) of the measuring tube (5).

2. The radar level measuring device (1) according to claim 1;
**characterized in that** the first measuring tube section (51) and the second measuring tube section (52) are each cut off in such a manner that a peripheral frontal edge (55, 56) of the respective ends (53, 54) on the side of the connection point extends in the longitudinal direction (L) of the measuring tube (5) over half a wavelength (λ) of the emitted electromagnetic waves.

3. The radar level measuring device (1) according to claim 1,
**characterized in that**
the peripheral frontal edge (55, 56) extends over at least one, preferably at least two, more preferably at least three or four wavelengths (λ) of the emitted electromagnetic waves.

4. The radar level measuring device (1) according to any one of the preceding claims,
**characterized in that**
the measuring tube sections (51, 52) are cut off obliquely, whereby a plane that includes an angle (α) with the longitudinal direction (L) of the measuring tube section is defined by the peripheral frontal edge (55, 56).

5. The radar level measuring device (1) according to claim 4,
**characterized in that**
the angle (α) is at most 85°, preferably 75° at most, more preferably 60° at most.

6. The radar level measuring device (1) according to any one of the preceding claims,
**characterized in that**
the first measuring tube section (51) and the second measuring tube section (52) are connected by means of a socket (11).

7. The radar level measuring device (1) according to claim 6,
**characterized in that**
the socket (11) externally encloses the first measuring tube section (51) and the second measuring tube section (52) at the ends (53, 54) thereof on the side of the connection point.

8. The radar level measuring device (1) according to claim 6 or 7,
**characterized in that**
the socket (11) is welded to the measuring tube sections (51, 52).

9. The radar level measuring device (1) according to claim 8,
**characterized in that**
the socket (11) has longitudinal slots (60) and, preferably, the measuring tube sections (51, 52) and the socket (11) are welded together in these longitudinal slots (60).

10. The radar level measuring device (1) according to claim 6,
**characterized in that**
the socket (11) is divided in the longitudinal direction and preferably has two parts (12).

11. The radar level measuring device (1) according to claim 10,
**characterized in that**
the two parts (12) are configured as half shells, partial shells, U-shaped profiles or L-shaped profiles.

12. The radar level measuring device (1) according to any one of the claims 8 to 11,
**characterized in that**
the parts (12) are additionally or alternatively glued to the measuring tube sections (51, 52), preferably in the longitudinal direction.

13. The radar level measuring device (1) according to any one of the claims 1 to 5,
**characterized in that**
the first measuring tube section (51) and the second measuring tube section (52) are connected via at least one flange (13).

14. The radar level measuring device (1) according to claim 12,
**characterized in that**
a flange (13) is attached, preferably welded to, both measuring tube sections, and the measuring tube sections (51, 52) are clamped to one another by means of the flanges (13).

15. The radar level measuring device (1) according to claim 12,
**characterized in that**
a flange (13) is attached, preferably welded, to one measuring tube section (51, 52), and a retaining ring (15) is attached, preferably welded, to the other measuring tube section (51, 52), and the measuring tube sections (51, 52) are clamped to one another by means of the flange (13) and a collar flange (14) reaching over the retaining ring (15).

16. The radar level measuring device (1) according to any one of the claims 1 to 5,
**characterized in that**
the measuring tube sections (51, 52) are welded to one another peripherally.

## Revendications

1. Appareil de mesure de niveau à radar (1) comprenant un générateur de signal (3) destiné à générer et à émettre des ondes électromagnétiques d'une longueur d'onde (λ)
- comprenant un tube de mesure (5) droit au moins en deux parties et ayant un premier tronçon de tube de mesure (51) et un deuxième tronçon de tube de mesure (52) qui sont reliés entre eux sur un point de jonction (7),
**caractérisé par le fait que** lesdits tronçons de tube de mesure (51, 52) sont reliés entre eux directement sur le point de jonction (7), que le premier tronçon de tube de mesure (51) et le deuxième tronçon de tube de mesure (52) correspondent l'un à l'autre et sont coupés en oblique à leurs extrémités (53, 54) respectives côté point de jonction, qu'un bord frontal périphérique (55, 56) des extrémités (53, 54) respectives côté point de jonction s'étend dans la direction longitudinale (L) du tube de mesure (5).

2. Appareil de mesure de niveau à radar (1) selon la revendication 1, **caractérisé par le fait que** le premier tronçon de tube de mesure (51) et le deuxième tronçon de tube de mesure (52) sont coupés chacun de manière à ce qu'un bord frontal périphérique (55, 56) des extrémités (53, 54) respectives côté point de jonction s'étend dans la direction longitudinale (L) du tube de mesure (5) sur au moins une demi-longueur d'onde (À) des ondes électromagnétiques émises.

3. Appareil de mesure de niveau à radar (1) selon la revendication 1, **caractérisé par le fait que** le bord frontal périphérique (55, 56) s'étend sur au moins une, de préférence au moins deux, de manière encore plus préférée au moins trois ou quatre longueurs d'onde (À) de l'onde électromagnétique émise.

4. Appareil de mesure de niveau à radar (1) selon l'une quelconque des revendications précédentes, **caractérisé par le fait que** les tronçons de tube de mesure (51, 52) sont coupés en oblique, par ledit bord frontal périphérique (55, 56) étant défini un plan qui forme un angle (α) avec la direction longitudinale (L) du tronçon de tube de mesure.

5. Appareil de mesure de niveau à radar (1) selon la revendication 4, **caractérisé par le fait que** l'angle (α) est de 85° tout au plus, de préférence de 75° tout au plus, de manière encore plus préférée de 60° tout au plus.

6. Appareil de mesure de niveau à radar (1) selon l'une quelconque des revendications précédentes, **caractérisé par le fait que** le premier tronçon de tube de mesure (51) et le deuxième tronçon de tube de mesure (52) sont reliées entre eux au moyen d'un manchon (11).

7. Appareil de mesure de niveau à radar (1) selon la revendication 6, **caractérisé par le fait que** ledit manchon (11) entoure, sur la face extérieure, le premier tronçon de tube de mesure (51) et le deuxième tronçon de tube de mesure (52) au niveau de leurs extrémités (53, 54) côté point de jonction.

8. Appareil de mesure de niveau à radar (1) selon la revendication 6 ou 7, **caractérisé par le fait que** le manchon (11) et les tronçons de tube de mesure (51, 52) sont soudés entre eux.

9. Appareil de mesure de niveau à radar (1) selon la revendication 8, **caractérisé par le fait que** le manchon (11) présente des fentes longitudinales (60) et que, de préférence, les tronçons de tube de mesure (51, 52) et le manchon (11) sont soudés dans ces fentes longitudinales (60).

10. Appareil de mesure de niveau à radar (1) selon la revendication 6, **caractérisé par le fait que** le manchon (11) est divisé dans la direction longitudinale et comprend de préférence deux parties (12).

11. Appareil de mesure de niveau à radar (1) selon la revendication 10, **caractérisé par le fait que** les deux parties (12) sont réalisées en tant que demi-coques, coques partielles, profilés en U ou profilés en L.

12. Appareil de mesure de niveau à radar (1) selon l'une quelconque des revendications 8 à 11, **caractérisé par le fait que**, de préférence, en plus ou de manière alternative, les parties (12) sont collées dans la direction longitudinale avec les tronçons de tube de mesure (51, 52).

13. Appareil de mesure de niveau à radar (1) selon l'une quelconque des revendications 1 à 5, **caractérisé par le fait que** le premier tronçon de tube de mesure (51) et le deuxième tronçon de tube de mesure (52) sont reliés entre eux par au moins une bride (13).

14. Appareil de mesure de niveau à radar (1) selon la revendication 12, **caractérisé par le fait qu'**une bride (13) est fixée, de préférence soudée, sur les deux tronçons de tube de mesure, et les tronçons de tube de mesure (51, 52) sont serrés entre eux au moyen des brides (13).

15. Appareil de mesure de niveau à radar (1) selon la revendication 12, **caractérisé par le fait qu'**une bride (13) est fixée, de préférence soudée, sur un tronçon de tube de mesure (51, 52) et une bague de maintien (15) est fixée, de préférence soudée, sur l'autre tronçon de tube de mesure (51, 52), et que les tronçons de tube de mesure (51, 52) sont serrés entre eux au moyen de la bride (13) et d'une bride tournante (14) s'engageant sur ladite bague de maintien (15).

16. Appareil de mesure de niveau à radar (1) selon l'une quelconque des revendications 1 à 5 **caractérisé par le fait que** les tronçons de tube de mesure (51, 52) sont soudés entre eux de manière circonférentielle.
